**Europäisches Patentamt**

**European Patent Office**

**Office européen des brevets**

(19)

(11) Veröffentlichungsnummer: **0 031 560**
**A2**

(12) ## EUROPÄISCHE PATENTANMELDUNG

(21) Anmeldenummer: 80108053.2

(22) Anmeldetag: 19.12.80

(51) Int. Cl.³: **G 05 D 23/32, F 24 D 19/10**

(30) Priorität: 27.12.79 DE 2952432

(43) Veröffentlichungstag der Anmeldung: 08.07.81
Patentblatt 81/27

(84) Benannte Vertragsstaaten: **AT BE CH FR GB IT LI NL SE**

(71) Anmelder: Gebhard Satzinger GmbH & Co
Metallwarenfabrik, Promenadestrasse 13, D-8730 Bad
Kissingen (DE)

(72) Erfinder: **Satzinger, Roland, *, Verstorben (DE)**

(54) **Vorrichtung zur Temperaturabsenkung von Heizkörpern.**

(57) Bei dieser Vorrichtung ist in der Heizrohrleitung (1)
des Heizkörpers (2) ein Heizkörperventil (3) angeordnet,
dessen Temperaturfühler (4) oder Steuermedium zeitweise
durch ein Heizelement (13) aufgeheizt werden kann, das in
einem von einer Batterie (15) gespeisten Stromkreis (16)
angeordnet ist.

Zur Schaffung eines einfachen Systems einer aufgrund verschiedener Parameter steuerbaren und schnell
ansprechenden Ansenkung der Raumtemperatur, bei dem
eine Überhitzung des Temperaturfühlers verhindert wird,
wird eine auf das Heizelement (13) einwirkende Einrichtung (14) in Form eines Thermoschalters (14) oder eines
Wärmemengenreglers vorgesehen, die die abgegebene
Heizleistung und/oder die obere Temperatur des Heizelementes (13) begrenzt.

**EP 0 031 560 A2**

# 0031560

Vorrichtung zur Temperaturabsenkung von Heizkörpern

Die vorliegende Erfindung betrifft eine Vorrichtung zur Temperaturabsenkung von Heizkörpern, bestehend aus einem thermostatischen Heizkörperventil, dessen Temperaturfühler oder Steuermedium zeitweise mittels eines Heizelementes aufgeheizt werden kann.

Zur zeitweisen Absenkung der Raumtemperatur ist es bekannt, in den Raumthermostaten Heizwiderstände anzuordnen, die durch eine Schaltuhr eingeschaltet werden und dann im Raumthermostat eine höhere Temperatur als die tatsächliche Raumtemperatur vortäuschen, so daß die Heizkörperventile gedrosselt werden.

Es ist auch bekannt, die Fühler von thermostatisch gesteuerten Heizkörperventilen mit einem zusätzlichen Heizwiderstand zu beheizen, um damit die Heizkörperventile trotz tatsächlich niedrigerer Raumtemperatur zu schließen (DE-OS 2406748).

Diese bekannten Maßnahmen haben den Nachteil, daß die Absenkung und Wiedererwärmung des Raumes stark verzögert arbeiten.

Es ist zur schnelleren Wirkung der Absenkung eine Vorrichtung bekanntgeworden, bei der ein zweites Ventil in dem Vorlauf des Heizkörpers angeordnet ist, das elektrothermisch betätigbar ist. Die Schaltung dieses elektrothermischen Ventils erfolgt durch eine Schaltuhr oder von Wärmefühlern aus, die entweder im Raum angeordnet oder an einer Außenwand des Hauses angebracht sind. Das eigentliche thermostatische Heizkörperventil bleibt in jedem Fall auf seiner eingestellten Temperatur stehen (DE-OS 2727821).

Diese bekannte Ausführung hat den Nachteil, daß ein zusätzliches Ventil im Vorlauf des Heizkörpers vorgesehen werden muß, was zusätzlichen Raumbedarf erfordert und einen zusätzlichen Umbau der vorhandenen Anlagen erfordert. Außerdem arbeitet auch dieses System noch sehr schwerfällig, wegen Überhitzung und zu schwacher Heizleistung verzögert und ungenau, so daß viel kostbare Energie unnütz vergeudet wird. Bisher konnte die Heizleistung für das Heizelement nur sehr klein ausgelegt werden, da sonst eine totale Überhitzung stattfinden muß.

Die vorliegende Erfindung hat die Aufgabe, ein einfaches System einer aufgrund verschiedener Parameter steuerbaren und schnell ansprechenden Absenkung der Raumtemperatur zu schaffen, das leicht und ohne großen Aufwand gegen die vorhandenen normalen thermostatischen Heizkörperventilsteuerköpfe ausgetauscht werden kann.

Diese Aufgabe wird dadurch gelöst, daß eine auf das Heiz-

element wirkende Einrichtung zur Begrenzung der abgegebenen Heizleistung und/oder der oberen Temperatur und unteren Temperatur des Heizelementes, das den Temperaturfühler des Heizkörperventils auf eine höhere Temperatur bringt als die tatsächliche Raumtemperatur worauf das Heizkörperventil dann schließt, vorgesehen wird. Diese Einrichtung, es können hierfür Thermoschalter oder Wärmemengenregler vorgesehen werden, steuert die Heizleistung und/oder die obere Temperatur des Heizelementes und verhindert, daß die Wärmeabgabe des Heizelementes an den vorzugsweise in seiner unmittelbarer Nähe angeordneten Thermofühler des Heizkörperventils unkontrolliert zu groß wird und damit Heizelement und auch Thermofühler überhitzt werden. Der Thermoschalter, der im Stromkreis des Heizelementes angeordnet ist, unterbricht, sobald die eingestellte Temperatur erreicht ist, den Stromkreis, so daß das Heizelement abkühlt. Beim Erreichen einer bestimmten unteren Temperatur am Thermoschalter schließt dieser wieder den Stromkreis, worauf das Heizelement erneut den Temperaturfühler aufheizt. Die Heizleistung und der Temperaturbereich des Heizelementes wird dabei in solchen Grenzen eingestellt, daß bei geringstmöglichem Stromverbrauch das Heizkörperventil geschlossen bleibt, ohne ständig zu reagieren, d.h. zu öffnen und zu schließen. Sobald durch eine Schaltuhr oder einen manuell betätigten Schalter das System in Betrieb gesetzt wird, heizt das Heizelement den Temperaturfühler so schnell auf, daß er das Heizkörperventil praktisch

ohne große Zeitverzögerung schließen und damit die Heizmittelzufuhr absperren kann. In gleicher Weise kühlt der aufgrund der erfindungsgemäßen Maßnahmen nur in gewissen Grenzen erwärmte Temperaturfühler beim Abschalten des Systems schnell wieder ab, so daß er die normale Raumtemperatur rasch erfaßt und ebenso rasch das Heizkörperventil öffnet und die Wärmezufuhr wieder frei gibt. Der Thermoschalter kann dabei auf jede gewünschte Temperaturdifferenz von der normal gewünschten zur abgesenkten Raumtemperatur eingestellt werden, so daß eine äußerst präzise Absenkung erreicht werden kann. Dabei besteht die Möglichkeit, am Thermoschalter die beiden gewünschten Temperaturwerte oder nur die Differenz einzustellen. Zweckmäßigerweise kann der Einstellbereich begrenzt werden, damit eine falsche Einstellung und ggf. Einfrieren der Heizung verhindert wird. Eine weitere Alternative ist dadurch gegeben, daß der Thermoschalter die Einstellung von zwei verschiedenen Absenktemperaturen oder Temperaturdifferenzen ermöglicht, so daß für bestimmte Zeitabschnitte eine unterschiedliche Regelung erfolgen kann. Dies kann beispielsweise während der Lüftungsperioden des Raumes sinnvoll ausgenutzt werden. Statt der Möglichkeit, zwei verschiedene Absenktemperaturen bzw. Temperaturdifferenzen an einem Thermoschalter einstellen zu können, ist es ohne weiteres auch möglich, zwei Thermoschalter im gleichen Stromkreis einzubauen, die zu unterschiedlichen Zeiten in Funktion gesetzt werden und verschiedene Absenktemperaturen bzw. Temperaturdifferenzen aufweisen.

Eine weitere Möglichkeit der Ausgestaltung besteht darin, den Thermoschalter so auszubilden daß er ein zeitliches Schaltspiel aufweist, das einstellbar ist. Mit anderen Worten, der Thermoschalter wird nicht nur von der Temperatur des Heizelementes geregelt, sondern er schaltet in bestimmten Zeitabständen den Stromkreis unabhängig von der Temperatur des Heizelementes ab. Dadurch kann der Temperaturfühler die Raumtemperatur fühlen und gegebenenfalls das Heizkörperventil öffnen, wodurch ein zu großes Absenken der Raumtemperatur verhindert werden kann.

Damit der Thermoschalter schnell ansprechen kann, wird er vorzugsweise am oder in unmittelbarer Nähe des Heizelementes angeordnet. Auf diese Weise wird er sofort wirksam, wenn die entsprechende eingestellte Temperatur am Heizelement erreicht ist. Es treten somit keine Verfälschungen durch die sonstigen Teile und Wärmequellen der Umgebung ein.

Damit der Temperaturfühler aber noch immer die Raumtemperatur fühlen kann, ist es sinnvoll, die Verbindung zwischen Heizelement und Temperaturfühler nicht besonders gut wärmeleitend auszubilden. Fällt bei abgeschaltetem Heizkörperventil die Raumtemperatur zu stark ab, so kann sich trotz der Beheizung des Temperaturfühlers, dessen Temperatur dann mit der Raumtemperatur entsprechend sinkt, das Heizkörperventil wieder öffnen und den Raum auf eine Mindesttemperatur halten bzw. regeln.

Derselbe Effekt kann erreicht werden, wenn in den Stromkreis des Heizelementes eine zusätzliche Schalteinrichtung eingefügt wird, die mit einem Raumthermostaten od.dgl. wirkverbunden ist, der bei einer einstellbaren unteren Raumtemperatur den Stromkreis unterbricht und damit das Heizelement ausschaltet. Nun mißt der Temperaturfühler des Heizkörperventils wieder die tatsächlich herrschende tiefere Temperatur und öffnet das Heizkörperventil und damit die Zufuhr von Heizmittel zum Heizkörper. Auf diese Weise erwärmt sich der Raum wieder. Wenn er eine bestimmte obere Temperatur erreicht hat, schließt der Raumthermostat den Stromkreis für das Heizelement wieder, so daß dieses den Temperaturfühler erneut aufheizt, der das Heizkörperventil wieder schließt. Mit dieser Maßnahme wird verhindert, daß der Raum so weit abkühlt, daß unter Umständen der Heizkörper und/oder die Zu- und Ablaufrohre einfrieren.

Damit das Heizelement gut und schnell geregelt werden kann, ist es zweckmäßig, den Thermoschalter zumindest in guter wärmeleitender Verbindung mit dem Heizelement für den Temperaturfühler anzuordnen. Zweckmäßigerweise wird dabei der Thermoschalter mit dem Heizelement und dem Temperaturfühler zu einer leicht austauschbaren Baueinheit zusammengefaßt. Der Thermoschalter spricht dabei unmittelbar auf die Temperatur des Heizelementes an, so daß eine bedeutend schnellere Regelung in enger Toleranz erfolgt, als wenn eine Temperatur an irgend einer anderen Stelle, z.B. im Raum, gemessen und zur Regelung herangezogen wird. Ein weiterer Vorteil der Erfindung liegt darin, daß keine anderen Ventile im Rohrsystem eingebaut werden müssen, sondern daß vorhandene Heizkörperventilsteuerköpfe einfach ausgetauscht oder ergänzt werden können.

Die vorstehend beschriebenen Maßnahmen können ohne weiteres auch bei einem in den Stromkreis des Heizelementes eingebauten, die abgegebene Heizleistung des Heizelementes steuer- und regelbaren Wärmemengenregler, getroffen werden. Dabei kann der Wärmemengenregler allein oder zusammen mit dem Thermoschalter in den Stromkreis des Heizelementes eingebaut sein.

Nach einem weiteren Merkmal der Erfindung ist es zweckmäßig, den Thermoschalter und/oder den Wärmemengenregler für das Heizelement mit einer zusätzlichen Schalteinrichtung zu verbinden. Diese Schalteinrichtung kann mindestens ein einstellbarer Raumthermostat sein, der die untere Raumtemperatur begrenzt, d.h. verhindert, daß das Heizelement zu lange in Betrieb ist und das Heizkörperventil bis weit unter die unterste Absenktemperatur geschlossen bleibt. Vielmehr öffnet der Raumthermostat bei Erreichen der untersten gewünschten Raumtemperatur den Stromkreis des Heizelementes, so daß der Thermofühler des Heizkörperventils normal arbeiten kann und das Heizkörperventil öffnet, so daß sich der Raum aufheizt. Wenn während einer gewissen Absenkperiode die Raumtemperatur wieder einen bestimmten höheren Wert einnimmt, spricht der Raumthermostat wieder an und schließt den Stromkreis des Heizelementes, so daß dieses wieder in der beschriebenen Weise arbeiten kann.

Diese zusätzliche Schalteinrichtung kann ebenso wie der Thermoschalter oder der Wärmemengenregler des Heizelementes selbst mit einer Zeituhr wirkverbunden sein, so daß die Temperaturabsenkung nur zu bestimmten, einstellbaren Zeiten erfolgt. Die Zeituhr kann dabei mehrere Schaltperioden aufweisen und mehrere Stromkreise der Heizelemente verschiedener Heizkörper gleichzeitig steuern. Die Zeituhr kann weiterhin so eingestellt werden, daß mehrere Absenkperioden pro Tag erzielt werden, so z.B. außer zur Nachtzeit auch während der Mittagszeit, wo in der Regel bei Sonneneinstrahlung höhere Außentemperaturen herrschen. Anstelle von oder kombiniert mit der Zeitschaltuhr ist es nach einem weiteren Merkmal der Erfindung zweckmäßig, den Thermoschalter bzw. dessen Stromkreis mit einem Schalter zu verbinden, der von Hand oder beispielsweise durch einen Fensterflügel betätigbar ist. Dadurch ist es möglich, mit dem Öffnen des Fensters zum Lüften des Raumes den Thermoschalter zu betätigen und damit eine Temperaturabsenkung zu erreichen. Solange das Fenster geöffnet ist, ist das Heizkörperventil geschlossen, so daß keine zusätzliche Wärmeenergie durch das Fenster entweicht. Wenn das Fenster wieder geschlossen wird, dann wird der Thermoschalter abgeschaltet und das Heizkörperventil arbeitet in der üblichen Weise. Als Schalter kann ein Kontakt in der Art verwendet werden, wie er bei Kühlschranktüren oder Autotüren verwendet wird, die dann die Beleuchtung einschalten, wenn die Türe geöffnet wird.

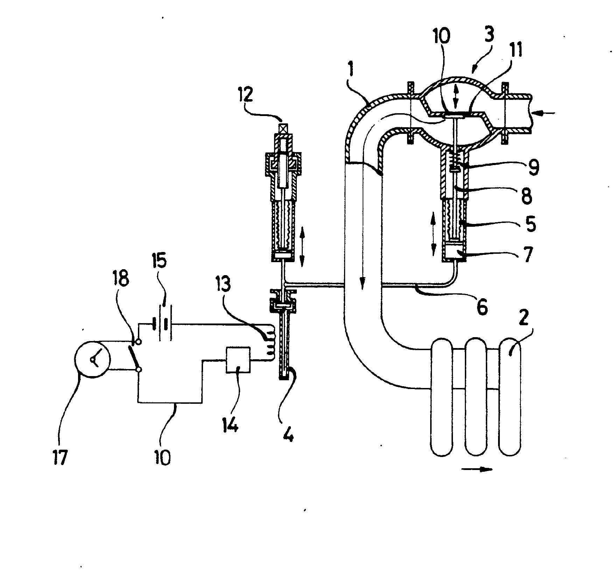

Nähere Einzelheiten der Erfindung sollen anhand des in der beigefügten Zeichnung schematisch dargestellten Ausführungsbeispieles erläutert werden. Die Teile wurden der besseren Darstellung wegen in einer auseinandergezogenen und nicht den tatsächlichen Gegebenheiten entsprechenden Lage gezeichnet. In der Heizrohrleitung 1 für den Heizkörper 2 ist ein Heizkörperventil 3 angeordnet, das mit einem Temperaturfühler 4 in Wirkverbindung steht. Der Temperaturfühler 4 besteht aus einem Rohr, das mit einer Flüssigkeit gefüllt ist, die sich bei Erwärmung besonders stark ausdehnt. Die Verbindung zum Steuerkörper 5 des Heizkörperventils 3 in der Heizrohrleitung 1 wird durch ein Kapillarrohr 6 hergestellt, das ebenfalls mit Flüssigkeit gefüllt ist. Das Kapillarrohr 6 endet in einem Zylinderraum 7, in dem sich der Ventilschaft 8 gegen eine Feder 9 bewegen kann. Am Ende des Ventilschaftes ist der Ventilkegel 10, der mit dem Ventilsitz 11 zusammenarbeitet.

Wird nun die Luft und damit die Raumtemperatur höher als gewünscht, so dehnt sich die Flüssigkeit im Rohr des Temperaturfühlers 4 und damit im Kapillarrohr 6 und im Zylinderraum 7 aus, überwindet die Gegenkraft der Feder 9 am Heizkörperventil 3 und drosselt oder schließt dieses. Hierdurch wird der Warmwasserstrom verringert und damit auch die Wärmeabgabe. Sinkt nun die Raumtemperatur, so kühlt sich die Flüssigkeit im Temperaturfühler 4 ab und zieht sich zusammen. Die Kraft der Feder 9 am Heizkörperventil 3 wird wieder größer als der Druck der Flüssigkeit und das Heizkörperventil 3 öffnet sich wieder. So wird die Raumtemperatur innerhalb kleiner Grenzen konstant gehalten. Die gewünschte absolute Größe der Raumtemperatur wird durch die Reguliervorrichtung 12 eingestellt. Durch Drehen der Schraube an der Reguliervorrichtung 12 wird die Feder 9 am Heizkörperventil 3 durch die Flüssigkeit mehr oder weniger zusammengedrückt und damit das Heizkörperventil 3 mehr oder weniger geöffnet. Hierdurch wird die Durchflußmenge des Warmwassers größer oder kleiner, die Raumtemperatur stellt sich höher oder niedriger ein. In der Nähe des Temperaturfühlers 4 ist ein Heizelement 13 angeordnet, das mit einem Thermoschalter 14 in einem von einer Batterie 15 oder einer anderen Stromquelle gespeisten Stromkreis 16 angeordnet ist. Dieses Heizelement 13 heizt bei eingeschaltetem Stromkreis den Temperaturfühler 4 auf, so daß dieser eine höhere Temperatur annimmt als der tatsächlichen Raumtemperatur entspricht. Aufgrund dieser höheren Temperatur am Temperaturfühler 4 wird das Heizkörperventil 3 in der oben beschriebenen Weise geschlossen und die Raumtemperatur sinkt ab.

Der Thermoschalter 14 ist so nahe am Heizelement 13 angeordnet, daß eine gute wärmeleitende Verbindung geschaffen ist. Die Ansprechtemperaturen bzw. eine Temperaturdifferenz, bei der der Thermoschalter 14 ansprechen soll, sind am Thermoschalter 14 in bekannter Weise einstellbar.

Wenn nun das Heizelement 13 die obere am Thermoschalter 14 eingestellte Temperatur erreicht, dann unterbricht der Thermoschalter 14 den Stromkreis 16, so daß das Heizelement 13 nicht mehr weiter heizt, sondern wieder abkühlt. Wird nun die untere am Thermoschalter 14 eingestellte Temperatur erreicht, dann schließt der Thermoschalter 14 den Stromkreis 16 des Heizelementes 13 wieder, das Heizelement 13 heizt sich wieder auf und gibt seine Wärme an den Temperaturfühler 4 ab. Auf diese Weise ist gewährleistet, daß das Heizelement 13 sich jeweils nur bis zu einer bestimmten Temperatur erhitzt also sich und den Temperaturfühler 4 nicht so stark überhitzt, daß bei einer Änderung der Verhältnisse eine lange Zeit verstreicht, bis sich die überhitzten Teile abkühlen und auf die tatsächlichen Gegebenheiten reagieren. Damit wird auch der Stromverbrauch für das Heizelement reduziert, ganz davon abgesehen, daß dadurch auch die Lebensdauer der Teile wesentlich verlängert wird. Das Heizelement 13 kann eine stärkere Heizleistung erhalten, da es durch den Thermoschalter 14 gegen Überhitzung geschützt ist, dadurch wird ein schnelles Aufheizen möglich. Durch den engbegrenzten Temperaturbereich des Heizelementes 13 und des Temperaturfühlers 4 wird außerdem vermieden, daß das Heizkörperventil 3 laufend geöffnet und geschlossen wird, was ebenfalls von Vorteil für den Betrieb der Heizung allgemein und/oder für die Lebensdauer des Heizkörperventils 3 ist.

- 12 -

Im Stromkreis 16 ist weiterhin noch ein durch eine Schaltuhr 17 betätigter Schalter 18 vorgesehen, wobei die Schaltuhr 17 so eingestellt ist, daß der Stromkreis 16 nur zu bestimmten Zeiten, z.B. in den Nachtstunden, geschlossen und das Heizelement 13 gesteuert durch den Thermoschalter 14 eingeschaltet ist. Bei geschlossenem Schalter 18 arbeitet das System in der vorstehend beschriebenen Weise.

Es ist nun möglich, aber nicht dargestellt, den Stromkreis 16 oder den Thermoschalter 14, wie bereits weiter oben beschrieben, mit einem Raumthermostaten zu verbinden, der bei Erreichen einer eingestellten unteren Temperatur im Raum den Stromkreis 16 unterbricht und damit das Heizelement 13 ausschaltet. Der Temperaturfühler 4 kühlt dann sehr schnell auf die tatsächliche Raumtemperatur ab und öffnet das Heizkörperventil 3. Dadurch wird der Raum wieder aufgeheizt bis bei einer zweiten am Raumthermostat eingestellten Temperatur der Stromkreis 16 wieder geschlossen wird und, sofern auch der durch die Zeituhr 17 betätigte Schalter 18 geschlossen ist, das Heizelement 13 und damit der Temperaturfühler 4 aufgeheizt und das Heizkörperventil 3 wieder geschlossen wird.

Weiterhin ist es möglich, anstelle der Zeituhr 17 oder neben der Zeituhr 17 einen - ebenfalls nicht dargestellten - weiteren Schalter vorzusehen, der beispielsweise von Hand betätigt oder in Abhängigkeit von der Öffnung eines Fensters oder einer Türe, d.h. von der Stellung dieser

0031560

Teile beim Lüften des Raumes, den Stromkreis 16 schließt, und wenn auch die übrigen Schalteinrichtungen des Stromkreises 16 geschlossen sind, das Heizelement 13 in der beschriebenen Weise in Tätigkeit setzt. Auf diese Weise wird erreicht, daß der Heizkörper während der Lüftungsperiode nicht, wie sonst wegen der sinkenden Raumtemperatur üblich, auf vollen Touren läuft und unnötig Wärme abgibt, die durch das geöffnete Fenster entweicht. Wenn nun das Fenster wieder geschlossen wird, dann wird das Heizelement 13 ausgeschaltet und der Temperaturfühler 4 spricht nur noch auf die tatsächlich herrschende Raumtemperatur an.

Anstelle des beschriebenen Thermoschalters 14, der die Temperatur des Heizelementes 13 regelt, kann, wie bereits mehrfach erwähnt, ein Wärmemengenregler vorgesehen werden, der die Heizleistung des Heizelementes 13, d.h. die an den Temperaturfühler 4 abgegebene Wärmemenge regelt. Auch auf diese Weise kann eine Überhitzung des Heizelementes 13 und des Temperaturfühlers 4 vermieden werden, so daß bei einer Änderung der Gegebenheiten eine rasche Reaktion der Teile des Systems erfolgen kann.

Bei einer weiteren Möglichkeit der Raumtemperatursteuerung kann auch die normale Raumtemperatur durch ein zusätzliches nicht dargestelltes elektr. schaltendes Raumthermostat im Stromkreis 16 geregelt werden, wenn die Temperatur nicht mit dem Temperaturfühler 4 des Heizkörperthermostatventils 3 geregelt werden soll.

Dabei schaltet der elektr. Raumthermostat das Heizelement 13 über den Thermoschalter 14 solange an bis
der Raum sich so weit abgekühlt hat, daß der elektr.
Raumthermostat den Stromkreis 16 wieder abschaltet,
wodurch das Heizelement 13 und der Fühler 4 sich abkühlt und das Ventil 3 öffnet und die Heizung 2 dadurch gesteuert wird.

Die abgesenkte Raumtemperatur kann auch über einen
zweiten elektr. Raumthermostaten im Stromkreis 16
über den Thermoschalter 14 mit einer Zeitschaltuhr 17
automatisch gesteuert werden, indem entweder der
eine oder der andere elektr. Raumthermostat in den
Stromkreis 16 wirksam schalten kann.

Mit Hilfe der Erfindung ist es somit möglich, einen
oder alle Heizkörper eines Zimmers selbsttätig sowohl
in Abhängigkeit von der Raumtemperatur als auch zeitabhängig zu steuern, d.h. für bestimmte Zeitperioden
das oder die Heizkörperventile zu schließen, ohne
daß dadurch das übrige Heizungssystem des Hauses beeinflußt wird. Anstelle einer generellen Nachtabsenkung
für das ganze Heizungssystem kann eine für jeden Raum
eine individuell verschiedene "Absenkung" zu unterschiedlichen Zeiten erreicht werden.

-15-

Die Erfindung läßt sich ohne Schwierigkeiten in einfacher Weise verwirklichen und kann auch nachträglich an bestehende Thermostat-Heizkörperventile angebracht werden. Sie ist nicht beschränkt auf das beschriebene, mit einem mit Flüssigkeit gefüllten Temperaturfühler ausgestattete Heizkörperventil, sondern kann auch bei anders aufgebauten Temperaturfühlern zur Anwendung gelangen, wie z.B. Bimetallfühlern, Fühlern mit einer leicht verdampfenden Flüssigkeit oder einem Gas gefüllten Bälgen u.dgl. Auch kann das Heizelement in einer anderen Weise als beschrieben ausgebildet sein und die Speisung des Stromkreises statt durch eine Batterie durch das Stromnetz erfolgen. Statt einer Schaltuhr kann auch ein anderes Schaltelement Verwendung finden.

PATENTANSPRÜCHE 0031560

1. Vorrichtung zur Temperaturabsenkung von Heizkörpern, bestehend aus einem thermostatisch gesteuerten Heizkörperventil $(3)$, dessen Temperaturfühler $(4)$ oder Steuermedium zeitweise mittels eines Heizelementes (13) aufgeheizt werden kann, gekennzeichnet durch eine auf das Heizelement (13) wirkende Einrichtung (14) zur Begrenzung der abgegebenen Heizleistung und/oder der oberen Temperatur des Heizelementes (13).

2. Vorrichtung nach Anspruch 1, gekennzeichnet durch mindestens einen einstellbaren, im Stromkreis (16) des Heizelementes (13) angeordneten Thermoschalter (14).

3. Vorrichtung nach Anspruch 2, dadurch gekennzeichnet, daß der Thermoschalter (14) im Temperaturbereich einstellbar ist.

4. Vorrichtung nach Anspruch 2 oder 3, dadurch gekennzeichnet, daß der Thermoschalter (14) ein einstellbares zeitliches Schaltspiel aufweist.

5. Vorrichtung nach einem der Ansprüche 2 bis 4, dadurch gekennzeichnet, daß zwei Thermoschalter mit unterschiedlichen Ansprechtemperaturen zeitabhängig zuschaltbar im Stromkreis (16) des Heizelementes (13) angeordnet sind.

6. Vorrichtung nach einem der Ansprüche 1 bis 5, dadurch gekennzeichnet, daß der Thermoschalter (14) am oder in unmittelbarer Nähe des Heizelementes (13) angeordnet ist.

7. Vorrichtung nach einem der Ansprüche 2 bis 6, dadurch gekennzeichnet, daß der Thermoschalter (14) in wärmeleitender Verbindung zum Heizelement (13) und/oder zum Temperaturfühler (4) des Heizkörperventils (3) angeordnet ist.

8. Vorrichtung nach einem der Ansprüche 2 bis 7, dadurch gekennzeichnet, daß der Thermoschalter (14) mit dem Heizelement (13) und dem Temperaturfühler (4) zu einer Baueinheit verbunden ist.

9. Vorrichtung nach einem der vorhergehenden Ansprüche, dadurch gekennzeichnet, daß ein Wärmemengenregler im Stromkreis (16) des Heizelementes (13) angeordnet ist.

10. Vorrichtung nach Anspruch 9, dadurch gekennzeichnet, daß der Wärmemengenregler in der Heizleistung einstellbar ist.

0031560

11. Vorrichtung nach einem der vorhergehenden Ansprüche, dadurch gekennzeichnet, daß im Stromkreis (16) des Heizelementes (13) zusätzliche Schalteinrichtungen vorgesehen sind.

12. Vorrichtung nach Anspruch 11, dadurch gekennzeichnet, daß die zusätzlichen Schalteinrichtungen mit mindestens einem die Raumtemperatur (en) begrenzenden einstellbaren Raumthermostat wirkverbunden sind.

13. Vorrichtung nach Anspruch 11 oder 12, dadurch gekennzeichnet, daß die zusätzlichen Schalteinrichtungen mit einer Zeituhr (17) wirkverbunden sind.

14. Vorrichtung nach Anspruch 13, dadurch gekennzeichnet, daß die Zeituhr (17) mehrere Schaltperioden aufweist.

15. Vorrichtung nach einem der Ansprüche 12 bis 14, dadurch gekennzeichnet, daß Raumthermostat und/oder Zeituhr (17) mit den Schalteinrichtungen mehrerer Stromkreise wirkverbunden sind.

0031560

16. Vorrichtung nach Anspruch 11, dadurch gekennzeichnet, daß die Schalteinrichtung ein von der Stellung des Fensters oder der Tür des zu beheizenden Raumes abhängiger Schalter ist.

17. Vorrichtung nach Anspruch 16, dadurch gekennzeichnet, daß die Schalteinrichtung neben einer Zeituhr (17) auch einen von der Stellung des Fensters oder der Tür des zu beheizenden Raumes abhängiger Schalter ist.